# EUROPEAN PATENT APPLICATION

(11) **EP 2 284 416 A1**
(43) Date of publication of application: **16.02.2011**
(21) Application number: 10171641.3
(22) Date of filing: 02.08.2010
(51) Int. Cl.: F16F 1/36

(54) **Vibration isolation system**

(30) Priority: 10.08.2009 US 538598
(71) Applicant: Raytheon Company, Waltham, MA 02451-1449 (US)
(72) Inventor: Schlittler, Paul E., McKinney, TX 75071 (US); Reed, John S., McKinney, TX 75070 (US); Pruett, James A., Allen, TX 75002-7313 (US); Kastendieck, William A., Fairview, TX 75069 (US); Zutavern, Zachary S., Dallas, TX 75248-5316 (US)
(74) Representative: Lawrence, John

(57) **Abstract**

According to one embodiment, a vibration isolation system (10) includes a heater element (18) thermally coupled to a damping element (12) formed of an elastomeric material having an elasticity that varies as a function of its temperature. The damping element (12) physically couples a first structure (14) to a second structure (16). The heater element (18) selectively heats the damping element to regulate its temperature for controlling the elasticity of the damping element.

## Description

### GOVERNMENT RIGHTS

This invention was made with government support under government contract number W56HZV-05-C-0724, subcontract number 050601-1-TG01-MFRF. The Government has certain rights in this invention.

### TECHNICAL FIELD OF THE DISCLOSURE

This disclosure generally relates to damping devices, and more particularly, to a vibration isolation system having an elastomeric polymer-based damping element whose temperature is regulated.

### BACKGROUND OF THE DISCLOSURE

Electronic circuits may include circuit components that may be generally delicate in nature. In some cases, electronic circuits are configured in protective enclosures or other devices that are designed to operate in environments that may be potentially damaging to their delicate circuit components. To protect these circuit components, electronic circuits may be configured in a chassis or other suitable type of enclosure for protection from harsh environments that may be encountered.

### SUMMARY OF THE DISCLOSURE

According to one embodiment, a vibration isolation system includes a heater element thermally coupled to a damping element formed of an elastomeric material having an elasticity that varies as a function of its temperature. The damping element physically couples a first structure to a second structure. The heater element selectively heats the damping element to regulate its temperature for controlling the elasticity of the damping element.

Some embodiments of the disclosure may provide numerous technical advantages. For example, one embodiment of the vibration isolation system may provide improved damping from vibration and physical shock while being relatively smaller and lighter than known vibration isolation systems using metallic damping mechanisms such as springs. Although certain vibration isolation systems with metallic damping mechanisms may be relatively more immune to changes in temperature than those systems with elastomeric polymers, their size and weight may limit their use in certain systems in which size and weight are important design considerations. The vibration isolation system according to the teachings of certain embodiments of the present disclosure provide a solution to this problem by regulating the temperature of the elastomeric polymer damping element to maintain a relatively consistent elasticity for improved vibration filtering performance in some embodiments.

Some embodiments may benefit from some, none, or all of these advantages. Other technical advantages may be readily ascertained by one of ordinary skill in the art.

### BRIEF DESCRIPTION OF THE DRAWINGS

A more complete understanding of embodiments of the disclosure will be apparent from the detailed description taken in conjunction with the accompanying drawings in which:
FIGURE 1 is a diagram showing one embodiment of a vibration isolation system according to the teachings of the present disclosure; and
FIGURES 2A and 2B are perspective and exploded views, respectively of another embodiment of a vibration isolation system according to the teachings of the present disclosure.

### DETAILED DESCRIPTION OF EXAMPLE EMBODIMENTS

It should be understood at the outset that, although example implementations of embodiments are illustrated below, various embodiments may be implemented using any number of techniques, whether currently known or not. The present disclosure should in no way be limited to the example implementations, drawings, and techniques illustrated below. Additionally, the drawings are not necessarily drawn to scale.

Electronic circuits may be configured with various protective devices for operation in relatively harsh environments. An aircraft, for example, may be configured with varying types of electronic circuits for controlling its operation and/or communicating with other aircraft or ground-based communication stations. In operation, the aircraft may encounter various temperature, pressure, and/or physical stress conditions that could potentially damage delicate circuit components of these electronic circuits. In particular, electronic circuits may be subjected to physical vibration or shock forces due to normal operation of the aircraft.

Vibration and physical shock isolation devices have been developed to isolate electronic circuits configured on aircraft from the potentially damaging effects of physical vibration or shock forces. Known vibration and physical shock isolation devices typically use elastic damping elements made of materials such as metallic springs, or elastomeric polymer compounds to damp vibrational and/or shock energy from being imparted into the electronic circuits. Vibration and physical shock isolation devices implemented with elastomeric polymer compounds may be advantageous in that they are generally smaller and lighter in weight than those implemented with metallic springs. The elasticity of known elastomeric polymers, however, often varies with changes in temperature such that their use may be precluded on devices, such as aircraft, that may undergo relatively large changes in temperature during their normal operation.

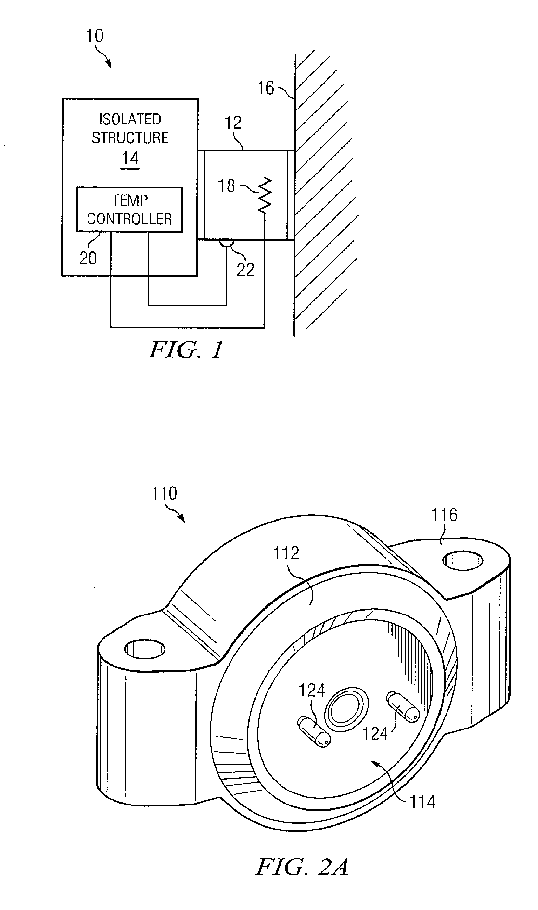

FIGURE 1 is a diagram showing one embodiment of a vibration isolation system 10 according to an embodiment of the present disclosure. Vibration isolation system 10 includes a damping element 12 that physically couples an isolated structure 14 to a support structure 16. Damping element 12 is thermally coupled to a heater element 18 that imparts heat into damping element 12. Isolated structure 14 includes a temperature controller 20 that monitors a temperature of damping element 12 using a thermal sensor 22 to control the temperature of heater element 18 by selectively applying heat according to the measured temperature of damping element 12.

Certain embodiments of vibration isolation system 10 may provide advantages over other known vibration isolation systems. Vibration isolation system 10 incorporates a damping element 12 made of an elastomeric polymer material that provides similar vibration and shock isolation to known isolation systems using metallic springs while being relatively smaller in size and weight. Vibration isolation system 10 may also provide greater performance over known vibration isolation systems using elastomeric polymer materials whose performance often varies with changes in temperature.

The temperature of damping element 12 may be affected by several factors. For example, the temperature of the environment around damping element 12 may affect its temperature. Thus, in one embodiment, vibration isolation system 10 may include a thermal insulation barrier (not shown) that is disposed adjacent to damping element 12 for shielding it against environmental conditions that may otherwise adversely affect its operating temperature. As another example, vibrational energy imparted into damping element 12 may cause an increase of its temperature. In such cases, temperature controller 20 may reduce power to heater element 18 such that a relatively constant temperature of damping element 12 is maintained.

Certain materials are known to have elastic properties which may be useful for damping vibration of physical shock energy. Specifically, elastomers such as thermoset elastomers or thermoplastic elastomers may provide sufficient elasticity for damping vibration and/or physical shock energy. Damping element 12 may be formed of any suitable elastomeric polymer material that provides sufficient vibration and shock isolation of isolated structure 14 from support structure 16 during normal operation. Examples of suitable elastomeric polymer materials include, but not limited to, silicone-based elastomeric polymers, nitrile butadiene rubbers (NBRs) , neoprene, and ethylene-propylene-diene monomer (EPDM) rubber formulations.

In certain cases, support structure 16 may generate or transfer vibration and/or physical shock energy due to its normal operation. For example, an aircraft may generate vibrational energy at specific frequency ranges due to operation of its one or more engines. In such cases, damping element 12 may be designed to provide one or more natural vibration frequencies for damping vibrational energy at these frequency ranges. Due to elasticity changes that typically occur with changes in temperature, however, the damping effect provided by known elastomers may be reduced at certain operating temperatures. Thus, certain embodiments of vibration isolation system 10 may provide an advantage in that damping element 12 may be designed to damp vibration and/or physical shock at particular frequency ranges by controlling the operating temperature of damping element 12.

Vibration isolation system 10 may be implemented on any system for which vibration and/or shock damping of an isolated structure 14 from its support structure 16 may be desired. In one embodiment, isolated structure 14 includes an electronic circuit having one or more circuit components that may be damaged by vibration or shock imparted through its support structure 16. In another embodiment, support structure 16 includes a chassis that houses the electronic circuit.

In the particular embodiment shown, temperature controller 20 comprises a portion of isolated structure, which in this case is an electronic circuit. In other embodiments, temperature controller 20 may be independent of isolated structure 14. For example, temperature controller 20 may be configured on support structure 16 or other suitable structures. Temperature controller 20 senses the temperature of damping element 12 and selectively adjusts energy supplied to heater element 18. Heater element 18 may be a resistor or other type of device that may be controlled by temperature controller 20 to generate varying levels of heat. In one embodiment, temperature controller 20 may control the operating temperature of damping element 12 according to upper and lower threshold temperature values. In the event that the operating temperature of damping element 12 exceeds an upper threshold temperature, temperature controller 20 may reduce power to heater element 18. Conversely, temperature controller 20 may increase power the heater element 18 if the operating temperature falls below a lower threshold temperature value.

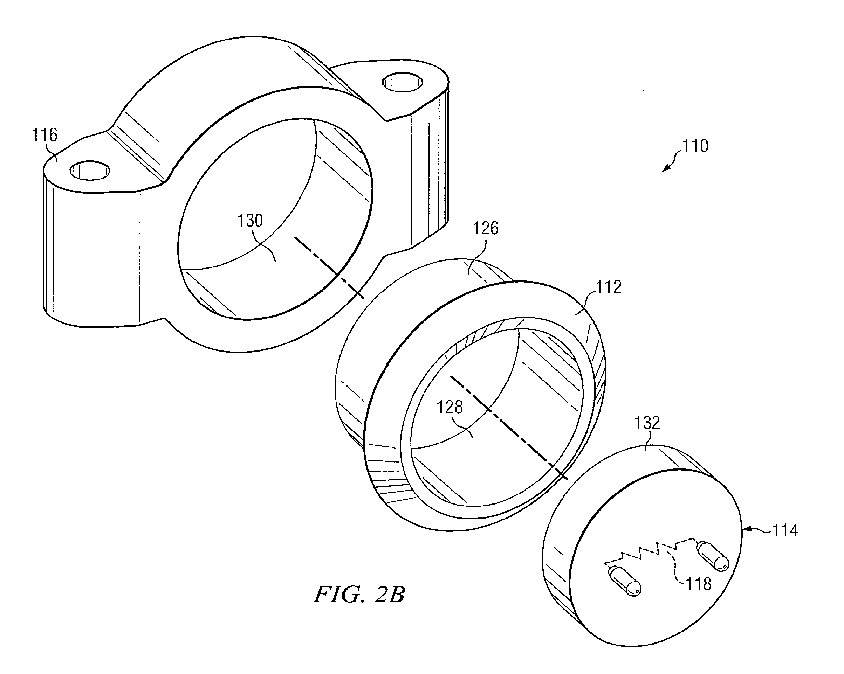

FIGURES 2A and 2B are perspective and exploded views, respectively of another embodiment of a vibration isolation system 110 according to the teachings of the present disclosure. Vibration isolation system 110 includes a damping element 112 that physically couples an isolated structure 114 to a support structure 116. Isolated structure 114 includes a heater element 118 that is coupled to a pair of electrical contacts 124 for coupling to an electrical power source that may be controlled by a suitable temperature controller, such as the temperature controller 20 described with reference to FIGURE 1.

In the particular embodiment shown, heater element 118 is embedded in isolated structure 114 that is made of a thermally conductive material, such as metal. In other embodiments, heater element 118 may be embedded in support structure 116 or other suitable element that is thermally coupled to damping element 112. By embedding heater element 118 in isolated structure 114, thermal coupling of heater element 118 to damping element 112 may be provided by isolated structure 114. Certain embodiments of heater element 118 embedded in isolated structure 114 may provide an advantage in that heat may be imparted into damping element 112 in a relatively even manner. That is, the thermally conductive nature of isolated structure 114 disperses heat from heater element 118 to mitigate thermal hot spots that may typically occur in relatively close proximity to heater element 118.

Damping element 112 has an annular shape with an outer surface 126 and an inner surface 128. Outer surface 126 of damping element 112 is physically coupled to an inner wall 130 of a hole configured in support structure 116. Inner surface 128 of damping element 112 is physically coupled to an outer wall 132 of isolated structure 114. In one embodiment, damping element 112 is secured to support structure 116 and isolated structure 114 using a suitable adhesive.

Modifications, additions, or omissions may be made to vibration isolation system 10 without departing from the scope of the disclosure. The components of vibration isolation system 10 may be integrated or separated. For example, temperature controller 20 may be an integral part of an electrical circuit configured on isolated structure 14, may be configured external to isolated structure 14. Moreover, the operations of vibration isolation system 10 may be performed by more, fewer, or other components. For example, damping element 12 may be configured with other structural features that adjust its natural vibration frequency for operation in particular environments with known isolation requirements. Additionally, operations of temperature controller 20 may be performed using any suitable logic comprising software, hardware, and/or other logic.

Although the present disclosure has been described with several embodiments, a myriad of changes, variations, alterations, transformations, and modifications may be suggested to one skilled in the art, and it is intended that the present disclosure encompass such changes, variations, alterations, transformation, and modifications as they fall within the scope of the appended claims.

## Claims

1. A vibration isolation system (10) comprising:
a damping element (12) physically coupling a first structure (14) to a second structure (16), the damping element (12) formed of an elastomeric material having an elasticity that varies as a function of its temperature; and
a heater element (18) thermally coupled to the damping element (12) and operable to:
selectively heat the damping element (12) to regulate its temperature for controlling the elasticity of the damping element (12).

2. The vibration isolation system (10) of claim 1, wherein the heater element (18) is operable to selectively heat the damping element (12) to regulate a vibration damping level or a physical shock damping level of the damping element (12).

3. The vibration isolation system (10) of claim 1 or claim 2, wherein the heater element (18) is operable to selectively heat the damping element (12) to regulate a natural vibration frequency of the damping element (12).

4. The vibration isolation system (10) of any of claims 1 to 3, further comprising a temperature controller (20) coupled to the heater element (18) and a thermal sensor (22) coupled to the damping element (12), the temperature controller (20) operable to receive a signal representing the temperature of the damping element (12) from the thermal sensor (22) and adjust electrical power to the heater element (18) according to the received signal.

5. The vibration isolation system (10) of claim 1, or of any of claims 2 to 4, wherein the first structure (14) comprises an electronic circuit and the second structure (16) comprises a chassis that houses the electronic circuit, the electronic circuit comprises a temperature controller operable to regulate the temperature of the heater element (18).

6. The vibration isolation system (10) of claim 1, or of any of claims 2 to 5, wherein the heater element (18) is embedded in the first structure (14), the first structure (14) being thermally coupled to the damping element (12).

7. The vibration isolation system (10) of claim 1, or of any of claims 2 to 6, wherein the elastomeric material comprises a material selected from the group consisting of a silicon-based elastomeric polymer and an ethylene-propylene-diene monomer (EPDM) rubber.

8. The vibration isolation system (10) of claim 1, or of any of claims 2 to 7, wherein the damping element (12) has an annular shape with an outer surface and an inner surface physically coupled to a circular outer wall of the first structure (14), the outer surface physically coupled to an inner wall of a hole configured in the second structure (16).

9. A vibration and physical shock isolation method comprising:
providing a damping element (12) physically coupling a first structure (14) to a second structure (16), the damping element (12) formed of an elastomeric material having an elasticity that varies as a function of its temperature, the damping element (12) thermally coupled to a heater element (18); and
selectively heating the damping element (12) using the heater element (18) to regulate its temperature for controlling the elasticity of the damping element (12).

10. The vibration and physical shock isolation method of claim 9, wherein selectively heating the damping element (12) to regulate its temperature comprises selectively heating the damping element (12) to regulate a vibration damping level or a physical shock damping level of the damping element (12).

11. The vibration and physical shock isolation method of claim 9, or of claim 10, wherein selectively heating the damping element (12) to regulate its temperature comprises selectively heating the damping element (12) to regulate a natural vibration frequency of the damping element (12).

12. The vibration and physical shock isolation method of claim 9, or of claim 10, or of claim 11, further comprising receiving a signal representing the temperature of the damping element (12) and adjusting electrical power to the heater element (18) according to the received signal.

13. The vibration and physical shock isolation method of claim 9, or of any of claims 10 to 12, wherein the first structure (14) comprises an electronic circuit and the second structure (16) comprises a chassis that houses the electronic circuit, the damping element (12) physically coupling an electronic circuit to a chassis that houses the electronic circuit, and further comprising regulating the temperature of the heater element (18) using a temperature controller (20), the electronic circuit comprising the temperature controller (20).

14. The vibration and physical shock isolation method of claim 9, or of any of claims 10 to 13, further comprising embedding the heater element (18) in the first structure (14), the first structure (14) thermally coupled to the damping element (12).

15. The vibration and physical shock isolation method of claim 9, or of any of claims 10 to 14, wherein the elastomeric material comprises a material selected from the group consisting of a silicon-based elastomeric polymer and an ethylene-propylene-diene monomer (EPDM) rubber.

16. The vibration and physical shock isolation method of claim 9, or of any of claims 10 to 15, further comprising forming the damping element (12) having an annular shape with an outer surface and an inner surface physically coupled to a circular outer wall of the first structure (14), the outer surface physically coupled to an inner wall of a hole configured in the second structure (16).
